(19) Europäisches Patentamt / European Patent Office / Office européen des brevets

(11) **EP 3 575 822 B1**

(12) **FASCICULE DE BREVET EUROPEEN**

(45) Date de publication et mention
de la délivrance du brevet:
**04.05.2022 Bulletin 2022/18**

(21) Numéro de dépôt: **19177354.8**

(22) Date de dépôt: **29.05.2019**

(51) Classification Internationale des Brevets (IPC):
***G01S 7/41*** *(2006.01)*

(52) Classification Coopérative des Brevets (CPC):
**G01S 7/411; G01S 13/9023; G01S 13/9027**

(54) **PROCÉDÉ ET SYSTÈME DE DÉTERMINATION D'UNE DIMENSION CARACTÉRISTIQUE D'UN NAVIRE**

VERFAHREN UND SYSTEM ZUR BESTIMMUNG EINER CHARAKTERISTISCHEN ABMESSUNG EINES SCHIFFS

METHOD AND SYSTEM FOR DETERMINING A CHARACTERISTIC DIMENSION OF A VESSEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.06.2018 FR 1800545**

(43) Date de publication de la demande:
**04.12.2019 Bulletin 2019/49**

(73) Titulaire: **Thales
92400 Courbevoie (FR)**

(72) Inventeurs:
 • **GENIN, Jean-Baptiste**
 **78851 ELANCOURT (FR)**
 • **BOSSER, Luc**
 **78851 ELANCOURT (FR)**
 • **BROUSSOLLE, Joan**
 **78851 ELANCOURT (FR)**

(74) Mandataire: **Lavoix
2, place d'Estienne d'Orves
75441 Paris Cedex 09 (FR)**

(56) Documents cités:
 **GB-A- 2 189 962 US-A1- 2015 268 340**

 • LIMING LU ET AL: "A target detection method in range-Doppler domain from SAR echo data", PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 1, 11 août 2002 (2002-08-11), pages 91-94, XP010613282, DOI: 10.1109/ICPR.2002.1044620 ISBN: 978-0-7695-1695-0
 • GREIDANUS H ED - BARALE V ET AL: "Remote Sensing of the European Seas, Satellite Imaging for Maritime Surveillance of the European Seas", 31 mars 2008 (2008-03-31), REMOTE SENSING OF THE EUROPEAN SEAS, SPRINGER SCIENCE+BUSINESS MEDIA B.V, DORDRECHT, NL, PAGE(S) 343 - 358, XP002514546, ISBN: 978-1-4020-6772-3 [extrait le 2008-03-15] * le document en entier *
 • Tg Kostis ET AL: "Interferometric Inverse Synthetic Aperture Radar (InISAR)", London Communications Symposium 2005, 1 septembre 2005 (2005-09-01), XP055083892, Extrait de l'Internet: URL:http://rootca.aegean.gr/radar/inisar/FB14-LCS-PRESENTATION.pdf [extrait le 2013-10-14]

**Description**

La présente invention concerne un procédé de détermination d'au moins une dimension caractéristique d'un navire. La présente invention porte aussi sur un système associé de détermination d'au moins une dimension caractéristique d'un navire. La présente invention concerne également un aéronef comprenant un tel système de détermination.

Le domaine technique est celui de l'imagerie radar de cibles maritimes, tels que des navires. L'imagerie radar permet d'obtenir des images représentatives des réflecteurs élémentaires des navires. L'imagerie radar repose sur le traitement des signaux de rétrodiffusion issus de l'objet à observer et enregistrés par un dispositif radar cohérent.

En particulier, l'imagerie SAR (de l'anglais « Synthetic Aperture Radar » traduit en français par « radar à synthèse d'ouverture ») est une technique d'imagerie radar permettant de fournir des vues de dessus des navires. Une image SAR représente les réflecteurs d'un navire vus par le dispositif radar en fonction de la distance desdits réflecteurs par rapport au dispositif radar et de la fréquence Doppler du signal radar réfléchi sur lesdits réflecteurs.

Plus précisément, une image SAR est une matrice I(x, y) de pixels. Chaque pixel a une amplitude correspondant à la puissance réfléchie par un réflecteur, et des coordonnées (x,y). Chaque colonne (axe x) de la matrice de pixels correspond à une distance entre un réflecteur et le dispositif radar. Ainsi, l'axe x de l'image SAR, aussi appelé axe distance, est une représentation de la direction de visée entre un réflecteur et le dispositif radar lors de l'acquisition de l'image SAR. Chaque ligne (axe y) de la matrice de pixels correspond à un décalage en fréquence causé par l'effet Doppler et indicatif d'une vitesse relative entre le réflecteur et le dispositif radar. Ainsi, l'axe y de l'image SAR, aussi appelé axe doppler, est une représentation de la vitesse relative entre le réflecteur et le dispositif radar. Les grandeurs de distance et de décalage en fréquence étant échantillonnées avec des pas prédéterminés, on parlera respectivement de case distance et de case doppler pour chaque coordonnée d'un pixel.

Les images SAR sont notamment utilisées pour l'imagerie radar maritime de surveillance dans le but d'extraire une signature du navire permettant une classification, voire une reconnaissance du navire. En particulier, les images SAR sont utilisées pour déterminer des dimensions caractéristiques des navires, telles que la longueur ou la largeur des navires.

Pour obtenir de telles dimensions caractéristiques des navires, il convient de déterminer, d'une part, la relation entre les cases distance et la distance entre un réflecteur et le dispositif radar, et d'autre part, la relation entre les cases doppler et la distance entre le réflecteur et la direction de visée. La relation pour les cases distance est connue puisque l'échantillonnage temporel sur l'axe distance correspond à un échantillonnage en distance. La relation pour les cases doppler dépend du défilement angulaire entre le dispositif radar et le point imagé entre le début et la fin de l'acquisition.

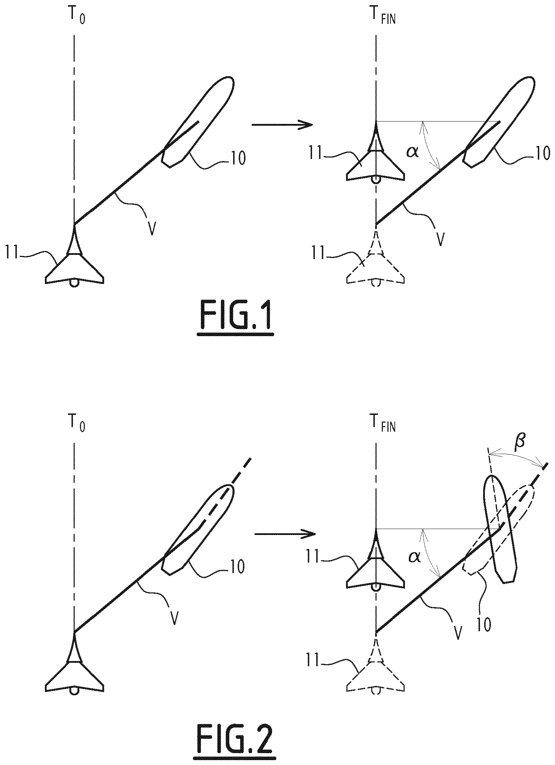

Dans le cas de l'imagerie de terrain, illustrée en figure 1, les réflecteurs du navire sont fixes et seul le dispositif radar porté par un aéronef se déplace d'un angle $\alpha$ par rapport au navire. Dans ce cas, la relation pour les cases doppler est connue, ce qui permet d'en déduire des dimensions fiables du navire.

Néanmoins, dans le cas de l'imagerie de cibles maritimes, le défilement angulaire des réflecteurs qui est habituellement la conséquence du déplacement du détecteur radar présente généralement une autre contribution, à savoir le mouvement propre du navire imagé. Par exemple, dans l'exemple illustré par la figure 2, le navire est, en outre, affecté d'un mouvement de lacet $\beta$ au cours de l'acquisition. Ainsi, au défilement angulaire a généré par le déplacement du dispositif radar s'ajoute le défilement angulaire $\beta$ généré par le mouvement du navire. La vitesse de lacet du navire n'étant pas connue, la relation pour les cases doppler n'est donc pas maitrisée et les dimensions déterminées du navire sont susceptibles de présenter des erreurs non négligeables

La demande de brevet US 2015/268340 A décrit un exemple de radar à synthèse d'ouverture inverse. L'article « A target détection method in range-Doppler domain from SAR echo data » de Liming Lu et al, publié dans IEEE Comput. Soc, US, volume 1, 11 août 2002, pages 91 à 94 décrit un procédé de détection de cibles sur la base de signaux SAR.

Il existe donc un besoin pour un procédé permettant de déterminer de manière fiable les dimensions caractéristiques d'un navire, telles que la longueur ou la largeur du navire, indépendamment des éventuels mouvements dudit navire.

A cet effet, l'invention a pour objet un procédé de détermination d'au moins une dimension caractéristique d'un navire, telle que la longueur ou la largeur du navire, le procédé étant mis en œuvre par un système électronique, le système électronique comprenant un dispositif radar et un calculateur, le dispositif radar comprenant au moins deux voies distinctes de réception d'un signal radar, le procédé comprenant les étapes suivantes :

- l'acquisition, pour chacune des deux voies de réception du dispositif radar, d'une image radar à synthèse d'ouverture imageant le navire dans un environnement, les deux images radar résultant de signaux radar issus d'un même signal d'émission radar et respectivement reçus par chacune des deux voies de réception du dispositif radar, chaque image radar étant une matrice de pixels, chaque pixel ayant une amplitude et des coordonnées appelées case distance et case doppler,

- la somme des amplitudes respectives des pixels des deux images radar pour obtenir une image somme,
- l'extraction des pixels de l'image somme imageant le navire pour obtenir un masque du navire,
- la détermination d'une plage de différences de phase entre les signaux radar reçus par chacune des deux voies de réception, et
- la détermination d'une dimension caractéristique du navire en fonction du masque du navire et de la plage de différences de phase déterminée.

Selon d'autres aspects avantageux de l'invention, le procédé de détermination comprend une ou plusieurs des caractéristiques suivantes, prises isolément ou suivant toutes les combinaisons techniquement possibles :

- le dispositif radar a une géométrie, les deux images radar étant acquises à une fréquence d'échantillonnage, à une distance de prise de vue et selon une direction de visée, l'étape de détermination d'une dimension caractéristique comprenant :

  • une sous-étape de détermination d'une dimension transverse du navire suivant une direction transverse en fonction du masque du navire, de la plage de différences de phase déterminée, de la distance de prise de vue et de la géométrie du dispositif radar, la direction transverse étant une direction orthogonale à la direction de visée,
  • une sous-étape de détermination d'une dimension radiale du navire suivant une direction radiale en fonction du masque du navire, et de la fréquence d'échantillonnage, la direction radiale étant la direction de visée, et
  • une sous-étape de détermination de la dimension caractéristique en fonction de la dimension radiale et de la dimension transverse déterminées ;

- la sous-étape de détermination d'une dimension transverse du navire comprend :

  • le calcul d'une extension angulaire correspondant à la plage de différences de phase déterminée en fonction de la géométrie du dispositif radar et de la plage de différences de phase déterminée, et
  • le calcul de la dimension transverse en fonction de l'extension angulaire calculée et de la distance de visée ;

- l'étape de détermination de la plage de différences de phase comprend :

  • une sous-étape de calcul, pour chaque ensemble de pixels du masque ayant la même case doppler, d'une différence de phase intermédiaire en fonction des signaux radar reçus par chacune des deux voies de réception et correspondant aux pixels dudit ensemble, et
  • une sous-étape d'obtention de la plage de différences de phase en fonction des différences de phase intermédiaires calculées.

- pour chaque ensemble de pixels du masque ayant la même case doppler, le calcul de la différence de phase intermédiaire comprend :

  • le calcul, pour chaque pixel de l'ensemble, du produit du signal reçu sur la première voie de réception et correspondant audit pixel par le conjuguée du signal reçu sur la deuxième voie de réception et correspondant audit pixel,
  • le calcul de la somme des produits calculés,

la différence de phase intermédiaire pour ledit ensemble étant l'argument de la somme calculée ;

- l'étape de détermination de la plage de différences de phase comprend une sous-étape de calcul d'une régression linéaire des différences de phase intermédiaires par rapport aux cases doppler du masque ;
- le calcul des différences de phase intermédiaires comprend, en outre, pour chaque ensemble de pixels du masque ayant la même case doppler, le calcul du module de la somme calculée, les différences de phase intermédiaires utilisées pour le calcul de la régression linéaire étant pondérées par les modules calculés correspondants ;
- l'étape de détermination de la plage de différences de phase comprend également :

  • une sous-étape de calcul de l'écart entre chaque différence de phase intermédiaire et la projection de ladite différence de phase intermédiaire sur la droite issue de la régression linéaire calculée, et
  • une sous-étape d'élimination des différences de phase intermédiaires dont les écarts calculés sont strictement supérieurs à un seuil,

les sous-étapes de calcul d'une régression linéaire, de calcul d'écarts et d'élimination étant répétées pour les valeurs restantes de différences de phase intermédiaires,

la plage de différences de phase étant obtenue en fonction de la pente de la dernière régression linéaire calculée.

L'invention concerne, en outre, un système de détermination d'au moins une dimension caractéristique d'un navire, telle que la longueur ou la largeur du navire, le système électronique comprenant un dispositif radar et un calculateur, le dispositif radar comprenant au moins deux voies distinctes de réception d'un signal radar, le système électronique étant propre à mettre en œuvre un procédé de détermination tel que décrit précédemment.

L'invention a aussi pour objet un aéronef comprenant un système électronique de détermination tel que décrit précédemment.

D'autres caractéristiques et avantages de l'invention apparaîtront à la lecture de la description qui suit de modes de réalisation de l'invention, donnés à titre d'exemple uniquement et en référence aux dessins qui sont :

- figure 1, une représentation schématique d'un exemple d'un aéronef se déplaçant par rapport à un navire immobile,
- figure 2, une représentation schématique d'un exemple d'un aéronef se déplaçant par rapport à un navire ayant un mouvement de lacet,
- figure 3, une représentation schématique vue de dessus d'une situation dans laquelle un système électronique embarqué dans un aéronef détermine une dimension caractéristique d'un navire,
- figure 4, une représentation schématique d'un exemple du système électronique de la figure 3,
- figure 5, un organigramme d'un exemple de mise en œuvre d'un procédé de détermination selon l'invention,
- figure 6, une représentation schématique d'un exemple d'une régression linéaire des différences de phase intermédiaires par rapport aux cases doppler du masque du navire, et
- figure 7, une représentation schématique d'un exemple d'une extension angulaire correspondant à une plage de différences de phase.

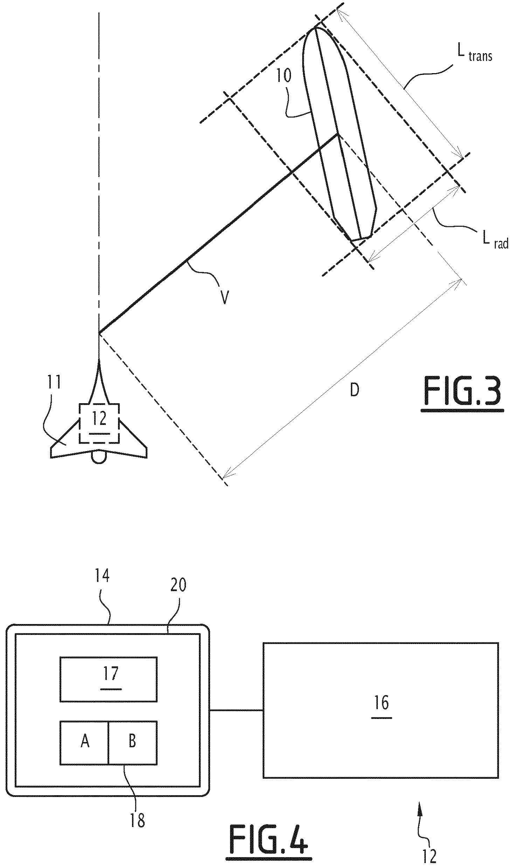

Un navire 10 et un aéronef 11 sont illustrés par la figure 3.

Le navire 10 comprend des réflecteurs propres à réfléchir un signal radar. Les réflecteurs du navire 10 sont, par exemple, la coque du navire 10, les superstructures du navire 10, telles que le château, la ou les grues ou le mât du navire 10, ou encore les rambardes de sécurité du navire 10.

Les dimensions caractéristiques du navire 10 sont, par exemple, la longueur du navire 10, la largeur du navire 10, la distance entre le mât du navire 10 et la proue du navire 10 ou encore la longueur du château du navire 10.

L'aéronef 11 comprend un système électronique 12 de détermination d'au moins une dimension caractéristique du navire 10.

Le système électronique 12 est configuré pour entraîner la mise en œuvre d'un procédé de détermination d'au moins une dimension caractéristique du navire 10.

Dans l'exemple illustré par la figure 4, le système électronique 12 comprend un dispositif radar 14 et un calculateur 16.

Dans l'exemple illustré par la figure 4, le dispositif radar 14 comprend au moins un émetteur 17 d'un signal radar et au moins un récepteur 18 du signal radar réfléchi sur des réflecteurs. Le récepteur 18 comprend au moins deux voies A, B distinctes de réception d'un signal radar. L'émetteur 17 et le récepteur 18 du dispositif radar 14 forment alors une antenne 20.

Le dispositif radar 14 présente une géométrie. Dans l'exemple illustré par la figure 4, la géométrie du dispositif radar 14 est définie en fonction des dimensions et de la forme de l'antenne 20 du dispositif radar 14. Par exemple, l'antenne 20 présente une forme carrée.

Le calculateur 16 est, par exemple, un ordinateur. Le calculateur 16 comprend, par exemple, une unité de traitement de données, des mémoires, un lecteur de support d'informations et une interface homme-machine, tel qu'un clavier ou un afficheur.

Dans l'exemple illustré par la figure 4, le système électronique 12 est porté par l'aéronef 11.

En variante, seul le dispositif radar 14 est porté par l'aéronef 11 et le calculateur 16 est installé dans une entité qui est, par exemple, au sol. Cela permet de déporter le traitement des images acquises via le dispositif radar 14 en dehors de l'aéronef 11.

Avantageusement, lorsque le calculateur 16 est déporté du dispositif radar 14, l'homme du métier comprendra que l'unité de traitement du calculateur 16 est propre à interagir avec un produit programme d'ordinateur adapté pour entraîner la mise en œuvre d'un procédé de détermination d'au moins une dimension caractéristique du navire 10. Dans ce cas, le produit programme d'ordinateur comporte un support lisible d'informations sur lequel est mémorisé le programme d'ordinateur.

L'homme du métier comprendra également que le dispositif radar 14 et/ou le calculateur 16 sont adaptés à être embarqués dans des porteurs autres que l'aéronef 11 à condition que lesdits porteurs permettent au dispositif radar 14 d'acquérir des images radar à synthèse d'ouverture du navire 10. Par exemple, le dispositif radar 14 et/ou le calculateur 16 sont embarqués dans un drone.

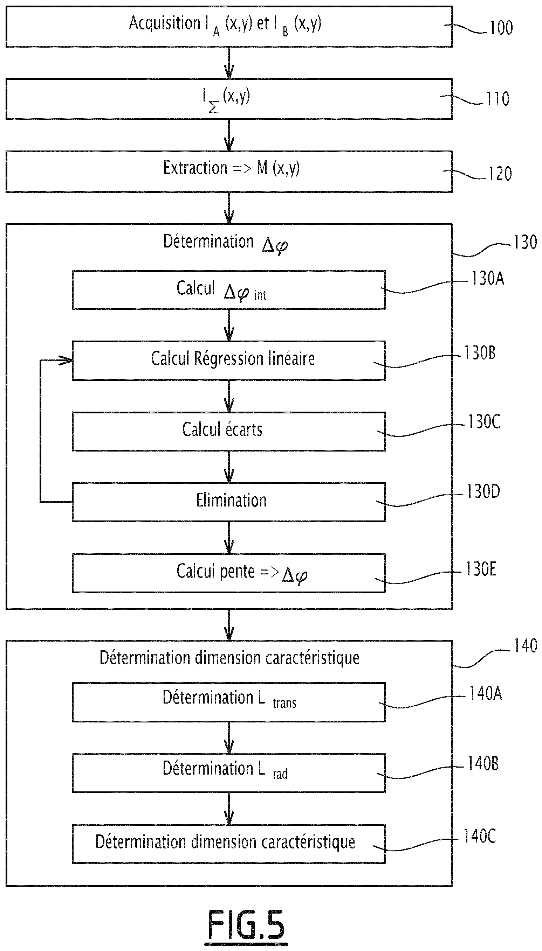

Le fonctionnement du système électronique 12 est maintenant décrit en référence à la figure 5 qui illustre un exemple de mise en œuvre d'un procédé de détermination selon l'invention.

Le procédé de détermination comprend une étape 100 d'acquisition, pour chacune des deux voies de réception A, B du dispositif radar 14, d'une image radar à synthèse d'ouverture $I_A(x, y)$, $I_B(x, y)$, aussi appelée image SAR, imageant le navire 10 dans un environnement. L'environnement est typiquement l'étendue d'eau sur laquelle navigue le navire 10.

Les deux images radar $I_A(x, y)$, $I_B(x, y)$ résultent de signaux radar issus d'une même émission radar et respectivement reçus par chacune des deux voies de réception A, B du dispositif radar 14. Les deux images radar $I_A(x, y)$, $I_B(x, y)$ sont acquises à une fréquence d'échantillonnage $f_{ech}$, à une distance de prise de vue D et selon une direction de visée V. La distance de prise de vue D et la direction de visée V sont illustrés par la figure 3.

Chaque image radar $I_A(x, y)$, $I_B(x, y)$ est une matrice de pixels.

Chaque pixel comprend une amplitude correspondant à la puissance réfléchie par un réflecteur et des coordonnées (x, y).

Chaque colonne (axe x) de la matrice de pixels correspond à une distance entre un réflecteur et le dispositif radar 14. Ainsi, l'axe x de chaque image radar $I_A(x, y)$, $I_B(x, y)$, aussi appelé axe distance, est une représentation de la direction de visée V entre un réflecteur et le dispositif radar 14 lors de l'acquisition de l'image radar $I_A(x, y)$, $I_B(x, y)$. Chaque ligne (axe y) de la matrice de pixels correspond à un décalage en fréquence causé par l'effet Doppler et indicatif d'une vitesse relative entre le réflecteur et le dispositif radar 14. L'axe y de chaque image radar $I_A(x, y)$, $I_B(x, y)$, aussi appelé axe doppler, est une représentation de la vitesse relative entre le réflecteur et le dispositif radar 14. Les grandeurs de distance et de décalage en fréquence étant échantillonnées avec des pas prédéterminés, on parlera respectivement de case distance et de case doppler pour chaque coordonnée x, y d'un pixel.

Le procédé de détermination comprend une étape 110 de somme des amplitudes respectives des pixels des deux images radar $I_A(x, y)$, $I_B(x, y)$ pour obtenir une image somme $I_\Sigma(x, y)$. Les pixels de l'image somme $I_\Sigma(x, y)$ ont donc une amplitude égale à la somme des amplitudes des pixels correspondants des deux images radar $I_A(x, y)$, $I_B(x, y)$ et des coordonnées (x,y) égales aux coordonnées des pixels correspondants des deux images radar $I_A(x, y)$, $I_B(x, y)$ acquises. L'étape de somme 110 est mise en œuvre par le calculateur 16.

Le procédé de détermination comprend une étape 120 d'extraction des pixels de l'image somme $I_\Sigma(x, y)$ imageant le navire 10 pour obtenir un masque M(x, y) du navire 10. L'étape d'extraction 120 est mise en œuvre par le calculateur 16.

Plus précisément, l'étape d'extraction 120 consiste à classifier les pixels en deux catégories : une première catégorie regroupant les pixels imageant les réflecteurs du navire 10 et une deuxième catégorie regroupant les pixels imageant l'environnement du navire 10 (fouillis de mer) ou sur lesquels figure du bruit, tel que du bruit thermique. Puis, seuls les pixels de la première catégorie sont extraits pour former le masque M(x,y) du navire 10.

L'étape d'extraction 120 est, par exemple, réalisée par une technique de séparation par mélange de lois. La technique de séparation par mélange de lois consiste à faire l'hypothèse que l'amplitude des pixels imageant le navire 10 suit une première loi, alors que le fouillis de mer suit une deuxième loi, distincte de la première loi. Selon cette technique, un seuil est calculé analytiquement pour séparer les deux catégories de pixels, à probabilité de fausse alarme donnée.

Dans un autre exemple, l'étape d'extraction 120 est réalisée par une méthode d'Otsu visant à minimiser la variance intra-classe.

Optionnellement, l'étape d'extraction 120 comprend, avant la classification et l'extraction des pixels, l'application d'un traitement sur l'image somme $I_\Sigma(x, y)$ visant à améliorer la qualité de l'image somme $I_\Sigma(x, y)$. Le traitement consiste, par exemple, à filtrer des artefacts liés à la rétrodiffusion des vagues d'étrave ou de sillage ou des échos défocalisés du fait de leur mouvement au cours de l'acquisition (effet Doppler) ou, plus généralement à réduire le bruit de l'image $I_\Sigma(x, y)$.

Optionnellement, l'étape d'extraction 120 comprend une étape d'application d'opérations morphologiques (fermeture, dilatation ou ouverture) sur les pixels extraits.

Le procédé de détermination comprend une étape 130 de détermination, par le calculateur 16, d'une plage de différences de phase $\Delta\varphi$ entre les signaux radar reçus par chacune des deux voies de réception A, B et permettant d'imager le navire 10.

L'étape 130 de détermination de la plage de différences de phase $\Delta\varphi$ comprend une première sous-étape 130A de calcul, pour chaque ensemble de pixels du masque M(x, y) ayant la même case doppler, d'une différence de phase intermédiaire $\Delta\varphi_{int}$, en fonction des signaux radar reçus par chacune des deux voies de réception A, B et correspondant aux pixels dudit ensemble.

Par exemple, le calcul de chaque différence de phase intermédiaire $\Delta\varphi_{int}$ comprend :

- le calcul, pour chaque pixel de l'ensemble, du produit du signal reçu sur la première voie de réception A et correspondant audit pixel par le conjuguée du signal reçu sur la deuxième voie de réception B et correspondant audit pixel,

- le calcul de la somme des produits calculés, et
- le calcul de l'argument et, le cas échéant, du module de la somme calculée.

La somme des produits calculés est exprimée sous forme mathématique par l'expression suivante :

$$v(x_{DOP}) = \sum_y A(x_{DOP}, y) \cdot \overline{B(x_{DOP}, y)} \qquad (1)$$

Où:

- $v(x_{DOP})$ désigne la somme des produits calculés pour un ensemble de pixels du masque M(x, y) de même case doppler $x_{DOP}$,
- $A(x,y)$ désigne le signal reçu sur la première voie de réception A et correspondant au pixel de coordonnées (x, y),
- $B(x,y)$ désigne le signal reçu sur la deuxième voie de réception B et correspondant au pixel de coordonnées (x, y),
- $\overline{B(x,y)}$ désigne le conjugué du signal $B(x,y)$, et
- $\Sigma_y Z(y)$ désigne la somme sur tous les y (c'est-à-dire sur toutes les cases distance) de la grandeur Z.

La différence de phase intermédiaire $\Delta\varphi_{int}$ de chaque ensemble est l'argument de la somme des produits calculés pour ledit ensemble, c'est à dire l'argument de $v(x_{DOP})$.

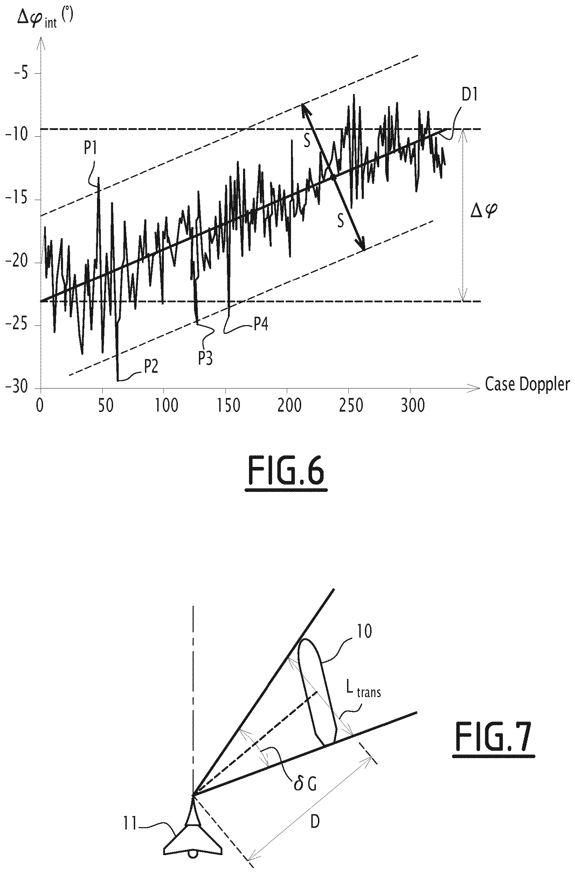

L'étape 130 de détermination de la plage de différences de phase $\Delta\varphi$ comprend, également, une deuxième sous-étape 130B de calcul d'une régression linéaire des différences de phase intermédiaires $\Delta\varphi_{int}$ par rapport aux cases doppler du masque M(x, y). Un exemple d'une droite D1 issue d'une régression linéaire calculée est illustré par la figure 6.

Avantageusement, les différences de phase intermédiaires $\Delta\varphi_{int}$ utilisées pour le calcul de la régression linéaire sont pondérées par les modules calculés correspondants.

L'étape 130 de détermination de la plage de différences de phase $\Delta\varphi$ comprend, également, une troisième sous-étape 130C de calcul de l'écart entre chaque différence de phase intermédiaire $\Delta\varphi_{int}$ et la projection de ladite différence de phase intermédiaire $\Delta\varphi_{int}$ sur la droite D1 issue de la régression linéaire.

L'étape 130 de détermination de la plage de différences de phase $\Delta\varphi$ comprend aussi une quatrième sous-étape 130D d'élimination des différences de phase intermédiaires $\Delta\varphi_{int}$ dont les écarts calculés sont strictement supérieurs à un seuil. Un exemple de seuil S est illustré par la figure 6. Dans cet exemple, les points P1, P2, P3 et P4 sont éliminés puisque la distance desdits points par rapport à la droite D1 est strictement supérieure au seuil S.

Le seuil dépend, par exemple, de la précision recherchée et du rapport signal à bruit présenté par le navire 10. Le seuil est, par exemple, fixé empiriquement.

Les sous-étapes de calcul d'une régression linéaire 130B, de calcul d'écarts 130C et d'élimination 130D sont répétées pour les valeurs restantes de différences de phase intermédiaires $\Delta\varphi_{int}$, par exemple, un nombre prédéterminé de fois. Le nombre prédéterminé de fois est, par exemple, égal à deux.

Avantageusement, les sous-étapes de calcul d'une régression linéaire 130B, de calcul d'écarts 130C et d'élimination 130D sont répétées jusqu'à ce que les écarts de toutes les différences de phase intermédiaires restantes $\Delta\varphi_{int}$ soient inférieurs ou égaux au seuil.

L'étape 130 de détermination de la plage de différences de phase $\Delta\varphi$ comprend aussi une cinquième sous-étape 130E de calcul de la pente, aussi appelé coefficient directeur, de la dernière régression linéaire calculée. La plage de différences de phase $\Delta\varphi$ est le produit de la pente de la dernière régression linéaire calculée par l'extension en nombre de cases doppler imageant le navire 10, c'est-à-dire par le nombre de pixels du masque M(x, y) ayant des cases doppler distinctes.

En variante, la cinquième sous-étape 130E comprend la détermination des deux différences de phase intermédiaires $\Delta\varphi_{int}$ correspondant aux points extrêmes de la droite issue de la dernière régression linéaire calculée sur la plage des cases doppler du masque M(x,y). La plage de différences de phase $\Delta\varphi$ est la différence des deux différences de phase intermédiaires $\Delta\varphi_{int}$ déterminées pour les points extrêmes.

En variante, l'étape de détermination de la plage de différences de phase $\Delta\varphi$ comprend seulement les première, deuxième et cinquième sous-étapes 130A, 130B, 130C de sorte que la différence de phase $\Delta\varphi$ est fonction de la seule régression linéaire calculée.

Le procédé de détermination comprend une étape 140 de détermination, par le calculateur 16, d'une dimension caractéristique du navire 10.

L'étape 140 de détermination comprend une première sous-étape 140A de détermination d'une dimension transverse $L_{trans}$ du navire 10 suivant une direction transverse. La direction transverse est une direction orthogonale à la direction de visée V. Un exemple de dimension transverse $L_{trans}$ est illustré par la figure 3.

La détermination de la dimension transverse $L_{trans}$ du navire 10 comprend le calcul d'une extension angulaire $\delta G$ correspondant à la plage de différences de phase $\Delta\varphi$ déterminée en fonction de la géométrie du dispositif radar 14

et de la plage de différences de phase déterminée Δφ. Un exemple d'extension angulaire est illustré par la figure 7.

Par exemple, pour une antenne carrée de côté L non pondérée, l'extension angulaire δG est donnée par l'expression suivante :

$$\delta G = \frac{\theta_{3dB} \cdot \Delta\phi}{0.89 \cdot \pi} \qquad (2)$$

Où:

- $\theta_{3dB}$ est la valeur de l'ouverture de l'antenne pour laquelle le gain a diminué de 3 dB par rapport au gain antenne maximum, dans le cas d'une antenne carrée de côté L non pondérée $\theta_{3dB} = 0.89 \cdot \frac{\lambda}{L}$,
- A est la longueur d'onde du signal radar, et
- $\Delta\phi$ est la plage de différences de phase entre les signaux radar reçus par chacune des deux voies de réception A et B.

Puis, la dimension transverse $L_{trans}$ est calculée en fonction de l'extension angulaire calculée δG et de la distance de visée D. Plus précisément, la dimension transverse $L_{trans}$ est le produit de l'extension angulaire δG et de la distance de visée D, donnée par l'expression suivante :

$$L_{trans} = D \cdot \delta G \qquad (3)$$

L'étape 140 de détermination comprend une deuxième sous-étape 140B de détermination d'une dimension radiale $L_{rad}$ du navire 10 suivant une direction radiale. La direction radiale est la direction de visée V. Un exemple de dimension radiale $L_{rad}$ est illustré par la figure 3.

La détermination de la dimension radiale $L_{rad}$ du navire 10 comprend le calcul de la distance représentée par chaque case distance en fonction de la fréquence d'échantillonnage $f_{ech}$. Par exemple, la distance $L_D$ représentée par chaque case distance est donnée par l'expression suivante :

$$L_D = \frac{c}{2 \cdot f_{ech}} \qquad (4)$$

Où:

- c est vitesse de propagation du signal radar.

Puis, le nombre de pixels du masque M(x,y) ayant des cases distance distinctes est déterminé.

La dimension radiale $L_{rad}$ est le produit de la distance $L_D$ représentée par chaque case distance et du nombre de pixels déterminés.

L'étape 140 de détermination comprend une troisième sous-étape 140C de détermination de la dimension caractéristique en fonction de la dimension radiale $L_{rad}$ et de la dimension transverse $L_{trans}$ déterminées.

Par exemple, la dimension caractéristique est donnée par l'expression suivante :

$$\hat{L} = \sqrt{L_{rad}^2 + L_{trans}^2} \qquad (5)$$

Où:

- $\hat{L}$ désigne une estimation de la dimension caractéristique, et
- $\sqrt{X}$ désigne la fonction racine carrée de X.

Ainsi, le procédé selon l'invention permet par le calcul de la plage de différences de phase Δφ entre les signaux reçus sur chaque voie de réception A, B d'obtenir des dimensions caractéristiques non affectée par le mouvement du navire 10.

Le procédé selon l'invention peut notamment être utilisé en complément d'un procédé de l'état de la technique, consistant à connaître à la fois la distance représenté par chaque pixel sur l'axe distance et la distance représenté par chaque pixel sur l'axe doppler, ou pour contrôler une estimation effectuée par un tel procédé de l'état de la technique. Ainsi, lorsque les résultats obtenus à l'issue des deux procédés sont proches, le résultat du procédé de l'état de la technique est validé, ce procédé présentant moins d'approximations que le procédé de l'invention. Par contre, lorsque les résultats obtenus à l'issue des deux procédés sont significativement éloignés, il est supposé que le navire 10 a eu un mouvement propre, et c'est le résultat du procédé de l'invention qui est conservé.

Le procédé selon l'invention permet donc de déterminer de manière fiable les dimensions caractéristiques d'un navire 10, telles que la longueur ou la largeur du navire 10, indépendamment des éventuels mouvements dudit navire 10.

**Revendications**

1. Procédé de détermination d'au moins une dimension caractéristique d'un navire (10), telle que la longueur ou la largeur du navire (10), le procédé étant mis en œuvre par un système électronique (12), le système électronique (12) comprenant un dispositif radar (14) et un calculateur (16), le dispositif radar (14) comprenant au moins deux voies (A, B) distinctes de réception d'un signal radar, le procédé comprenant les étapes suivantes :

   - l'acquisition, pour chacune des deux voies de réception (A, B) du dispositif radar (14), d'une image radar à synthèse d'ouverture ($I_A(x, y)$, $I_B(x, y)$) imageant le navire (10) dans un environnement,

     les deux images radar ($I_A(x, y)$, $I_B(x, y)$) résultant de signaux radar issus d'un même signal d'émission radar et respectivement reçus par chacune des deux voies de réception (A, B) du dispositif radar (14),
     chaque image radar ($I_A(x, y)$, $I_B(x, y)$) étant une matrice de pixels, chaque pixel ayant une amplitude et des coordonnées appelées case distance et case doppler,

   - la somme des amplitudes respectives des pixels des deux images radar ($I_A(x, y)$, $I_B(x, y)$) pour obtenir une image somme ($I_\Sigma(x, y)$),
   - l'extraction des pixels de l'image somme ($I_\Sigma(x, y)$) imageant le navire (10) pour obtenir un masque (M(x, y)) du navire (10),
   - la détermination d'une plage ($\Delta\varphi$) de différences de phase entre les signaux radar reçus par chacune des deux voies de réception (A, B), et
   - la détermination d'une dimension caractéristique du navire (10) en fonction du masque (M(x, y)) du navire (10) et de la plage de différences de phase ($\Delta\varphi$) déterminée.

2. Procédé selon la revendication 1, dans lequel le dispositif radar (14) a une géométrie, les deux images radar ($I_A(x, y)$, $I_B(x, y)$) étant acquises à une fréquence d'échantillonnage ($f_{ech}$), à une distance de prise de vue (D) et selon une direction de visée (V), l'étape de détermination d'une dimension caractéristique comprenant :

   • une sous-étape de détermination d'une dimension transverse ($L_{trans}$) du navire (10) suivant une direction transverse en fonction du masque (M(x, y)) du navire (10), de la plage de différences de phase ($\Delta\varphi$) déterminée, de la distance de prise de vue (D) et de la géométrie du dispositif radar (14), la direction transverse étant une direction orthogonale à la direction de visée (V),
   • une sous-étape de détermination d'une dimension radiale ($L_{rad}$) du navire (10) suivant une direction radiale en fonction du masque (M(x, y)) du navire (10), et de la fréquence d'échantillonnage ($f_{ech}$), la direction radiale étant la direction de visée (V), et
   • une sous-étape de détermination de la dimension caractéristique en fonction de la dimension radiale ($L_{rad}$) et de la dimension transverse ($L_{trans}$) déterminées.

3. Procédé selon la revendication 2, dans lequel la sous-étape de détermination d'une dimension transverse ($L_{trans}$) du navire (10) comprend :

   • le calcul d'une extension angulaire ($\delta G$) correspondant à la plage de différences de phase ($\Delta\varphi$) déterminée en fonction de la géométrie du dispositif radar (14) et de la plage de différences de phase déterminée ($\Delta\varphi$), et
   • le calcul de la dimension transverse ($L_{trans}$) en fonction de l'extension angulaire calculée ($\delta G$) et de la distance de visée (D).

4. Procédé selon l'une quelconque des revendications 1 à 3, dans lequel l'étape de détermination de la plage de

différences de phase ($\Delta\varphi$) comprend :

• une sous-étape de calcul, pour chaque ensemble de pixels du masque (M(x, y)) ayant la même case doppler, d'une différence de phase intermédiaire ($\Delta\varphi_{int}$) en fonction des signaux radar reçus par chacune des deux voies de réception (A, B) et correspondant aux pixels dudit ensemble, et
• une sous-étape d'obtention de la plage de différences de phase ($\Delta\varphi$) en fonction des différences de phase intermédiaires ($\Delta\varphi_{int}$) calculées.

**5.** Procédé de détermination selon la revendication 4, dans lequel pour chaque ensemble de pixels du masque (M(x, y)) ayant la même case doppler, le calcul de la différence de phase intermédiaire ($\Delta\varphi_{int}$) comprend :

• le calcul, pour chaque pixel de l'ensemble, du produit du signal reçu sur la première voie de réception (A) et correspondant audit pixel par le conjuguée du signal reçu sur la deuxième voie de réception (B) et correspondant audit pixel,
• le calcul de la somme des produits calculés,
la différence de phase intermédiaire ($\Delta\varphi_{int}$) pour ledit ensemble étant l'argument de la somme calculée.

**6.** Procédé selon la revendication 4 ou 5, dans lequel l'étape de détermination de la plage de différences de phase ($\Delta\varphi$) comprend une sous-étape de calcul d'une régression linéaire des différences de phase intermédiaires ($\Delta\varphi_{int}$) par rapport aux cases doppler du masque (M(x, y)).

**7.** Procédé selon la revendication 6 dans sa dépendance avec la revendication 5, dans lequel le calcul des différences de phase intermédiaires ($\Delta\varphi_{int}$) comprend, en outre, pour chaque ensemble de pixels du masque (M(x, y)) ayant la même case doppler, le calcul du module de la somme calculée, les différences de phase intermédiaires utilisées pour le calcul de la régression linéaire étant pondérées par les modules calculés correspondants.

**8.** Procédé selon la revendication 6 ou 7, dans lequel l'étape de détermination de la plage de différences de phase ($\Delta\varphi$) comprend également :

• une sous-étape de calcul de l'écart entre chaque différence de phase intermédiaire ($\Delta\varphi_{int}$) et la projection de ladite différence de phase intermédiaire ($\Delta\varphi_{int}$) sur la droite issue de la régression linéaire calculée, et
• une sous-étape d'élimination des différences de phase intermédiaires ($\Delta\varphi_{int}$) dont les écarts calculés sont strictement supérieurs à un seuil,
les sous-étapes de calcul d'une régression linéaire, de calcul d'écarts et d'élimination étant répétées pour les valeurs restantes de différences de phase intermédiaires ($\Delta\varphi_{int}$),

la plage de différences de phase ($\Delta\varphi$) étant obtenue en fonction de la pente de la dernière régression linéaire calculée.

**9.** Système électronique (12) de détermination d'au moins une dimension caractéristique d'un navire (10), telle que la longueur ou la largeur du navire (10), le système électronique (12) comprenant un dispositif radar (14) et un calculateur (16), le dispositif radar (14) comprenant au moins deux voies (A, B) distinctes de réception d'un signal radar, le système électronique (12) étant propre à mettre en œuvre un procédé de détermination selon l'une quelconque des revendications 1 à 8.

**10.** Aéronef (11) comprenant un système électronique de détermination (12) selon la revendication 9.

**Patentansprüche**

**1.** Verfahren zur Bestimmung mindestens einer charakteristischen Abmessung eines Schiffs (10), wie die Länge oder die Breite des Schiffes (10), wobei das Verfahren von einem elektronischen System (12) durchgeführt wird, das elektronische System (12) umfassend eine Radarvorrichtung (14) und einen Rechner (16), die Radarvorrichtung (14) umfassend mindestens zwei verschiedene Kanäle (A, B) zum Empfang eines Radarsignals, das Verfahren umfassend die folgenden Schritte:

- das Erfassen, für jeden der zwei Empfangskanäle (A, B) der Radarvorrichtung (14), eines Radarbilds mit synthetischer Apertur ($I_A(x, y)$, $I_B(x, y)$), das Schiff (10) in einer Umgebung abbildet, wobei die zwei Radarbilder ($I_A(x, y)$, $I_B(x, y)$) aus Radarsignalen resultieren, die von ein und demselben Radaremissionssignal stammen und jeweils von jedem der zwei Empfangskanäle (A, B) der Radarvorrichtung (14) empfangen werden, wobei jedes Radarbild ($I_A(x, y)$, $I_B(x, y)$) eine Pixel-Matrix ist, wobei jedes Pixel eine Amplitude und Koordinaten aufweist, die als Abstandsfeld und Dopplerfeld bezeichnet werden,

- das Summieren der jeweiligen Amplituden der Pixel der zwei Radarbilder ($I_A(x, y)$, $I_B(x, y)$), um ein Summenbild ($I_\Sigma(x, y)$) zu erlangen,
- das Extrahieren von Pixeln aus dem summierten Bild ($I^\wedge(x, y)$), das Schiff (10) abbildet, um eine Maske ($M(x, y)$) des Schiffs (10) zu erlangen,
- das Bestimmen eines Bereichs (Arp) von Phasendifferenzen zwischen den Radarsignalen, die von jedem der zwei Empfangskanäle (A, B) empfangen werden, und
- das Bestimmen einer charakteristischen Abmessung des Schiffs (10) abhängig von der Maske ($M(x, y)$) des Schiffs (10) und des bestimmten Phasendifferenzbereichs (Arp).

2. Verfahren nach Anspruch 1, wobei die Radarvorrichtung (14) eine Geometrie aufweist, wobei die zwei Radarbilder ($I_A(x, y)$, $I_B(x, y)$) mit einer Abtastfrequenz ($f_{ech}$), in einem Ansichtaufnahmeabstand (D) und in einer Zielrichtung (V) aufgenommen werden, der Schritt des Bestimmens einer charakteristischen Abmessung umfassend:

• einen Unterschritt eines Bestimmens einer Querabmessung ($L_{trans}$) des Schiffs (10) entlang einer Querrichtung abhängig von der Maske ($M(x, y)$) des Schiffs (10), dem bestimmten Phasendifferenzbereich (Arp), dem Ansichtaufnahmeabstand (D) und der Geometrie der Radarvorrichtung (14), wobei die Querrichtung eine Richtung orthogonal zu der Zielrichtung (V) ist,
• einen Unterschritt eines Bestimmens einer radialen Abmessung ($L_{rad}$) des Schiffs (10) entlang einer radialen Richtung abhängig von der Maske ($M(x, y)$) des Schiffs (10), und der Abtastfrequenz ($f_{ech}$), wobei die radiale Richtung die Zielrichtung (V) ist, und
• einen Unterschritt eines Bestimmens der charakteristischen Abmessung abhängig von der bestimmten radialen Abmessung ($L_{rad}$) und der bestimmten transversalen Abmessung ($L_{trans}$).

3. Verfahren nach Anspruch 2, wobei der Unterschritt eines Bestimmens einer Querabmessung ($L_{trans}$) des Schiffs (10) Folgendes umfasst:

• das Berechnen einer Winkelerstreckung ($\delta G$), die dem Phasendifferenzbereich ($\Delta\varphi$) entspricht, der abhängig von der Geometrie der Radarvorrichtung (14) und dem bestimmten Phasendifferenzbereich ($\Delta\varphi$) bestimmt wird, und
• das Berechnen der Querabmessung ($L_{trans}$) abhängig von der berechneten Winkelerstreckung ($\delta G$) und der Zielentfernung (D).

4. Verfahren nach einem der Ansprüche 1 bis 3, wobei der Schritt eines Bestimmens des Phasendifferenzbereichs ($\Delta\varphi$) Folgendes umfasst:

• einen Unterschritt zum Berechnen, für jede Pixeleinheit der Maske ($M(x, y)$), die dasselbe Dopplerfeld aufweist, einer Zwischenphasendifferenz ($\Delta\varphi_{int}$) abhängig von den Radarsignalen, die von jedem der zwei Empfangskanäle (A, B) empfangen werden und den Pixeln der Einheit entsprechen, und
• einen Unterschritt zum Erlangen des Phasendifferenzbereichs ($\Delta\varphi$) abhängig von den berechneten Zwischenphasendifferenzen ($\Delta\varphi_{int}$).

5. Bestimmungsverfahren nach Anspruch 4, wobei für jede Pixeleinheit der Maske ($M(x, y)$), die dasselbe Dopplerfeld aufweist, die Berechnung der Zwischenphasendifferenz ($\Delta\varphi_{int}$) Folgendes umfasst:

• das Berechnen, für jedes Pixel der Einheit, des Produkts des Signals, das auf dem ersten Empfangskanal (A) empfangen wird und dem Pixel entspricht, mit dem Konjugat des Signals, das auf dem zweiten Empfangskanal (B) empfangen wird und dem Pixel entspricht,
• das Berechnen der Summe der berechneten Produkte,

wobei die Zwischenphasendifferenz ($\Delta\varphi_{int}$) für die Einheit das Argument der berechneten Summe ist.

6. Verfahren nach Anspruch 4 oder 5, wobei der Schritt eines Bestimmens des Phasendifferenzbereichs ($\Delta\varphi$) einen Unterschritt eines Berechnens einer linearen Regression der Zwischenphasendifferenzen ($\Delta\varphi_{int}$) in Bezug auf die Dopplerfelder der Maske ($M(x, y)$) umfasst.

7. Verfahren nach Anspruch 6, wenn abhängig von Anspruch 5, wobei das Berechnen der Zwischenphasendifferenzen ($\Delta\varphi_{int}$) ferner für jede Einheit von Pixeln der Maske (M(x, y)), die dasselbe Dopplerfeld aufweist, das Berechnen des Moduls der berechneten Summe umfasst, wobei die für die Berechnung der linearen Regression verwendeten Zwischenphasendifferenzen mit den entsprechenden berechneten Modulen gewichtet werden.

8. Verfahren nach Anspruch 6 oder 7, wobei der Schritt eines Bestimmens des Phasendifferenzbereichs ($\Delta\varphi$) auch Folgendes umfasst:

   • einen Unterschritt eines Berechnens der Abweichung zwischen jeder Zwischenphasendifferenz ($\Delta\varphi_{int}$) und der Projektion der Zwischenphasendifferenz ($\Delta\varphi_{int}$) auf die Gerade aus der berechneten linearen Regression, und
   • einen Unterschritt eines Eliminierens von Zwischenphasendifferenzen ($\Delta\varphi_{int}$),deren berechnete Abweichungen strikt über einem Schwellenwert sind, wobei die Unterschritte eines Berechnens einer linearen Regression, eines Berechnens von Abweichungen und eines Eliminierens für die verbleibenden Werte der Zwischenphasendifferenzen ($\Delta\varphi_{int}$) wiederholt werden, wobei der Phasendifferenzbereich ($\Delta\varphi$) abhängig von der Steigung der zuletzt berechneten linearen Regression erlangt wird.

9. Elektronisches System (12) zum Bestimmen mindestens einer charakteristischen Abmessung eines Schiffs (10), wie die Länge oder die Breite des Schiffs (10), das elektronische System (12) umfassend eine Radarvorrichtung (14) und einen Rechner (16), wobei die Radarvorrichtung (14) mindestens zwei unterschiedliche Kanäle (A, B) zum Empfang eines Radarsignals umfasst, wobei das elektronische System (12) geeignet ist, um ein Bestimmungsverfahren nach einem der Ansprüche 1 bis 8 durchzuführen.

10. Luftfahrzeug (11), umfassend ein elektronisches Bestimmungssystem (12) nach Anspruch 9.

**Claims**

1. A method for determining at least one characteristic dimension of a ship (10), such as the length or the width of the ship (10), the method being implemented by an electronic system (12), the electronic system (12) comprising a radar device (14) and a calculator (16), the radar device (14) comprising at least two separate channels (A, B) for receiving a radar signal, the method comprising the following steps:

   - acquiring, for each of the two receiving channels (A, B) of the radar device (14), a synthetic aperture radar image ($I_A(x, y)$, $I_B(x, y)$) imaging the ship (10) in an environment,

      the two radar images ($I_A(x, y)$, $I_B(x, y)$) resulting from radar signals coming from a same radar emission signal and respectively received by each of the two receiving channels (A, B) of the radar device (14), each radar image ($I_A(x, y)$, $I_B(x, y)$) being a matrix of pixels, each pixel having an amplitude and coordinates called distance box and doppler box,

      - summing of the respective amplitudes of the pixels of the two radar images ($I_A(x, y)$, $I_B(x, y)$) to obtain a sum image ($I_\Sigma(x, y)$),
      - extracting pixels from the sum image ($I_\Sigma(x, y)$) imaging the ship (10) to obtain a mask (M(x, y)) of the ship (10),
      - determining a range ($\Delta\varphi$) of phase differences between the radar signals received by each of the two receiving channels (A, B), and
      - determining a characteristic dimension of the ship (10) as a function of the mask (M(x, y)) of the ship (10) and the determined range ($\Delta\varphi$) of phase differences.

2. The method according to claim 1, wherein the radar device (14) has a geometry, the two radar images ($I_A(x, y)$, $I_B(x, y)$) being acquired at a sampling frequency ($f_{ech}$), at a viewing distance (D) and in a viewing direction (V), the step for determining a characteristic dimension comprising:

   • a sub-step for determining a transverse dimension ($L_{trans}$) of the ship (10) in a transverse direction as a function of the mask (M(x, y)) of the ship (10), the determined range of phase differences ($\Delta\varphi$), the viewing distance (D) and the geometry of the radar device (14), the transverse direction being a direction orthogonal to the viewing direction (V),
   • a sub-step for determining a radial dimension of the ship (10) in a radial direction ($L_{rad}$) as a function of the mask (M(x, y)) of the ship (10), and the sampling frequency ($f_{ech}$), the radial direction being the viewing direction (V), and
• a sub-step for determining the characteristic dimension as a function of the determined radial dimension ($L_{rad}$) and transverse dimension ($L_{trans}$);

3. The method according to claim 2, wherein the sub-step for determining a transverse dimension ($L_{trans}$) of the ship (10) comprises:

   • calculating an angular extension ($\delta G$) corresponding to the range of phase differences ($\Delta \varphi$) determined as a function of the geometry of the radar device (14) and the determined range of phase differences ($\Delta \varphi$), and
   • calculating the transverse dimension ($L_{trans}$) as a function of the calculated angular extension ($\delta G$) and the viewing direction (D).

4. The method according to any one of claims 1 to 3, wherein the step for determining the phase difference range ($\Delta \varphi$) comprises:

   • a sub-step for calculating, for each set of pixels of the mask M(x, y)) having the same doppler box, an intermediate phase difference ($\Delta \varphi_{int}$) as a function of the radar signals received by each of the two receiving channels (A, B) and corresponding to the pixels of said set, and
   • a sub-step for obtaining the range of phase differences ($\Delta \varphi$) as a function of the calculated intermediate phase differences ($\Delta \varphi_{int}$).

5. The determining method according to claim 4, wherein for each set of pixels of the mask (M(x, y)) having the same doppler box, the calculation of the intermediate phase difference ($\Delta \varphi_{int}$) comprises:

   • calculating, for each pixel of the set, the product of the signal received on the first receiving channel (A) and corresponding to said pixel by the conjugate of the signal received on the second receiving channel (B) and corresponding to said pixel,
   • calculating the sum of the calculated products,

   the intermediate phase difference ($\Delta \varphi_{int}$) for said set being the argument of the calculated sum.

6. The method according to claim 4 or 5, wherein the step for determining the range of phase differences ($\Delta \varphi$) comprises a sub-step for calculating a linear regression of the intermediate phase differences relative to the doppler boxes of the mask (M(x, y)).

7. The method according to claim 6 in its dependency with claim 5, wherein the calculation of the intermediate phase differences ($\Delta \varphi_{int}$) further comprises, for each set of pixels of the mask (M(x, y)) having the same doppler box, calculating the modulus of the calculated sum, the intermediate phase differences used to calculate the linear regression being weighted by the corresponding calculated moduli.

8. The method according to claim 6 or 7, wherein the step for determining the phase difference range ($\Delta \varphi$) also comprises:

   • a sub-step for calculating the deviation between each intermediate phase difference ($\Delta \varphi_{int}$) and the projection of said intermediate phase difference ($\Delta \varphi_{int}$) on the line derived from the calculated linear regression, and
   • a sub-step for eliminating intermediate phase differences ($\Delta \varphi_{int}$) whose calculated deviations are strictly above a threshold,
   the sub-steps for calculating a linear regression, calculating deviations and elimination being repeated for the remaining intermediate phase difference values ($\Delta \varphi_{int}$),

   the range of phase differences ($\Delta \varphi$) being obtained as a function of the slope of the last calculated linear regression.

9. An electronic system (12) for determining at least one characteristic dimension of a ship (10), such as the length or the width of the ship (10), the electronic system (12) comprising a radar device (14) and a calculator (16), the radar device (14) comprising at least two separate channels (A, B) for receiving a radar signal, the electronic system (12) being able to implement a determining method according to any one of claims 1 to 8.

**10.** An aircraft (11) comprising an electronic determining system (12) according to claim 9.

FIG.1

FIG.2

$L_{trans}$

10

$L_{rad}$

V

D

11

12

FIG.3

14    20

17

A    B

16

18

FIG.4

12

Acquisition $I_A$ (x,y) et $I_B$ (x,y) —————100

$I_\Sigma$ (x,y) —————110

Extraction => M (x,y) —————120

Détermination $\Delta\varphi$ —————130

Calcul $\Delta\varphi_{int}$ —————130A

Calcul Régression linéaire —————130B

Calcul écarts —————130C

Elimination —————130D

Calcul pente => $\Delta\varphi$ —————130E

Détermination dimension caractéristique —————140

Détermination $L_{trans}$ —————140A

Détermination $L_{rad}$ —————140B

Détermination dimension caractéristique —————140C

## FIG.5

$\Delta\varphi_{int}$ (°)

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015268340 A

**Littérature non-brevet citée dans la description**

- **LIMING LU et al.** A target détection method in range-Doppler domain from SAR echo data. *IEEE Comput. Soc,* 11 Août 2002, vol. 1, 91-94